# EUROPEAN PATENT APPLICATION

(11) **EP 2 355 508 A1**
(43) Date of publication of application: **10.08.2011**
(21) Application number: 09290951.4
(22) Date of filing: 15.12.2009
(51) Int. Cl.: H04N 7/24, H04N 7/173, H04L 29/06

(54) **Process for controlling the display functions of a remote device during a video call session between said remote device and a multimedia server**

(71) Applicant: Alcatel Lucent, 75008 Paris (FR)
(72) Inventor: Poupel, Olivier, 35000 Rennes (FR)
(74) Representative: Sayettat, Julien Christian

(57) **Abstract**

The invention relates to a process for controlling the display functions of a remote device (1) during a video call session between said remote device and a multimedia server (2), wherein an audio and video stream (3) is sent to the remote device (1) by the multimedia server (2) within said session managed by a communication protocol, an add-on being created to the communication protocol in order to allow the multimedia server (2) to send a DISPLAY message (4) to the remote device (1), said message being adapted for the display of at least one function (5) which is overlaid to the stream (3) displayed on the remote device (1).

## Description

The invention relates to a process for controlling the display functions of a remote device during a video call session between said remote device and a multimedia server, a multimedia server comprising an application for controlling the display functions of a remote device according to such a process, as well as a remote device comprising an application for controlling its display functions during a video call session between said remote device and such a multimedia server.

With the increasing popularity of smartphones, such as Iphones® or personal digital assistants (PDA), the providers of multimedia services, especially the providers of video streaming and/or video on demand (VoD) services, redouble of efforts to develop adapted servers for such terminals.

Currently, if a user wants to access a multimedia service, for instance a video streaming service, he opens a video call session between his terminal and the multimedia server providing said service.

If the terminal of the user is a mobile terminal, like one of the above mentioned terminals, only the video sent by the multimedia server is displayed on the screen of said terminal during the video call session.

If the multimedia server wants to display a text or a menu in addition to the video, as for instance a logo appearing during said video displaying in the corner of the screen of the receiving terminal, it has to add said text or menu to said video according to the position of said text or menu inside the application.

In particular, the multimedia server has thus to encode the text or menu inside the video before sending said encoded video to the remote device.

Since everything is done by the server, the mobile device only displaying video without being able to differentiate a video from a text or from a logo, the current solution lacks of flexibility.

Current mobile devices have native overlay functions, as for example built-in player software especially programmed to make control buttons appear on the screen of a terminal during the display of a video on said terminal and when a user touches the screen of said terminal. However, current multimedia servers have generally no way to control such functions.

Some state-of-the-art mobile devices can implement Rich Media Client (RMC) applications, as for instance the Rich Media Client solutions of Streamezzo® or Adobe® Flash Lite®, said applications having some advanced display functions. However, such display functions are coded inside a generated XML (for eXtensible Markup Language) file, which is not flexible and not suitable for real-time conversational sessions between such mobile devices and multimedia servers.

Another solution has been proposed with the implementation of SMIL (for Synchronized Multimedia Integration Language) language in messages sent by multimedia servers to remote devices in order to display texts or logos which are overlaid to the videos displayed on said devices. But this solution requires that the remote devices also implement a SMIL decoder, which most of the time encodes the texts or logos to be displayed inside the videos.

The invention aims to improve the prior art by proposing a more flexible solution that gives a multimedia server the possibility to control some display functions of a remote device during a video call session between said server and said device.

For that purpose, and according to a first aspect, the invention relates to a process for controlling the display functions of a remote device during a video call session between said remote device and a multimedia server, wherein an audio and video stream is sent to the remote device by the multimedia server within said session managed by a communication protocol, an add-on being created to the communication protocol in order to allow the multimedia server to send a DISPLAY message to the remote device, said message being adapted for the display of at least one function which is overlaid to the stream displayed on the remote device.

According to a second aspect, the invention relates to a multimedia server comprising an application adapted to control the display functions of a remote device during a video call session between said multimedia server and said remote device, said application comprising means adapted to create an add-on to the communication protocol managing said session in order to allow said multimedia server to send a DISPLAY message to the remote device, said message being adapted for the display of at least one function which is overlaid to the stream displayed on the remote device.

According to a third aspect, the invention relates to a remote device comprising an application adapted to control its display functions during a video call session between said remote device and a such a multimedia server, said application comprising means adapted to call a dedicated API after the reception of a DISPLAY message to control the display of the at least one function.

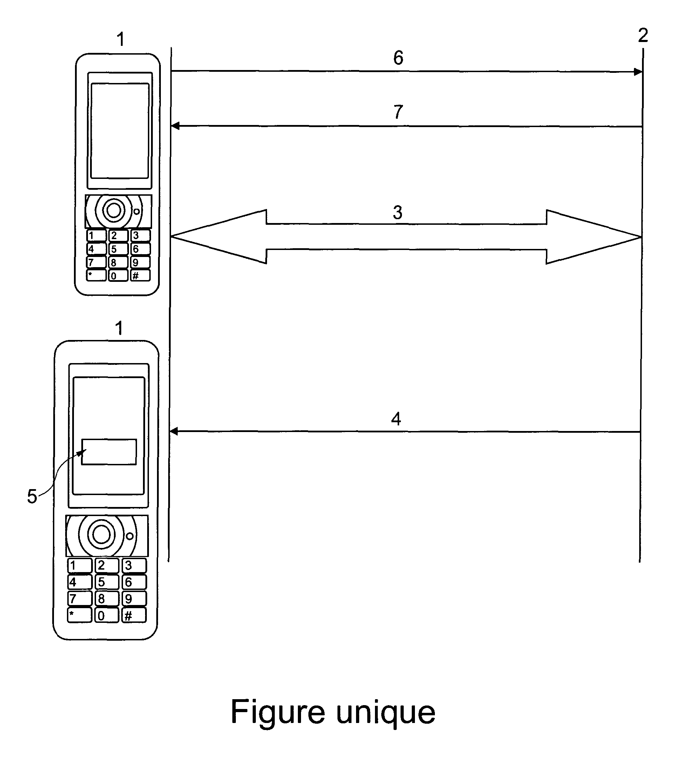

Other aspects and advantages of the invention will become apparent in the following description made with reference to the appended figure, which represents a functional architecture for a video call session between a multimedia server and a remote device, wherein a process according to the invention is implemented.

In relation to this figure, a process for controlling the display functions of a remote device 1 during a video call session between said remote device and a multimedia server 2 is described. Within the video call session, audio and video streams 3 are exchanged between the remote device 1 and the multimedia server 2. In particular, the multimedia server 2 sends at least one of such streams 3 to the remote device 1.

In relation to the figure, the remote device 1 can be a mobile terminal, in particular a smartphone, as for example a personal digital assistant (PDA), which embeds media player software. The remote device 1 can also be a personal computer embedding a softphone such as Skype® or Microsoft Live Messenger®.

According to a preferred embodiment, the video call session between the remote device 1 and the multimedia server 2 is managed by using the Session Initiation Protocol (SIP).

Whatever the communication protocol used, the process according to the invention provides for creating an add-on to said protocol in order to allow the multimedia server 2 to send a message 4 to the remote device 1, said message being adapted for the display of at least one function 5 which is overlaid to the stream 3 displayed on the remote device 1. Within this specification and claims, the message 4 is called DISPLAY message 4 without limiting the scope of the invention.

To do so, the multimedia server 2 comprises an application adapted to control the display functions of the remote device 1 during a video call session between said multimedia server and said remote device, said application comprising means adapted to create such an add-on. Such an application can for example be created with an open Software Development Kit (SDK) for mobile applications.

In relation to the remote device 1 at the bottom of the figure, the function 5 is an interactive text box which is overlaid to the stream 3 displayed on said remote device. In particular, for a multimedia server 2 providing for example a video streaming and/or video on demand (VoD) service, such a text-box 5 can be a good way to display dedicated advertisements or notifications while sending a stream 3 to the remote device 1 of a user.

According to another embodiment, the function 5 can also be an interactive button which is overlaid to the stream 3 displayed on the remote device 1, as for example a PLAY button, a PAUSE button or a progress bar as those available on conventional media player software. In particular, such an embodiment can be particularly advantageous for smartphones embedding touch screens, by enabling users of such devices to experience a dynamic interaction with the stream 3.

The process can further comprise, during the opening session negotiation between the multimedia server 2 and the remote device 1, a declaration of the display capabilities of said remote device before the sending of any DISPLAY message 4 by said multimedia server in order to create said message according to said capabilities.

The display capabilities of the remote device 1 relate in particular to the display functions of said remote device. They can for example consist in the presence or not of means in the media player software embedded in the remote device 1, said means being adapted to display functions 5 to be overlaid to the stream 3 displayed on said remote device.

In particular, the remote device 1 can comprise an application adapted to control its display functions during the video call session between said remote device and the multimedia server 2, said application comprising means adapted to call a dedicated Application Programming Interface (API) after the reception of a DISPLAY message 4 to control the display of the at least one function 5. Such an application can for example be created with an open Software Development Kit (SDK) for mobile applications, in relation to the application embedded in the multimedia server 2.

In this embodiment, during the declaration, the remote device 1 sends a message 6 with a description of its display capabilities.

In relation to the figure, the message 6 can be an opening session message sent by the remote device 1 to the multimedia server 2, the description of the display capabilities of said remote device being inserted in said message. For example, in a session managed by the SIP protocol, the description of the display capabilities can be inserted in the dedicated packet header of the opening session message 6.

The multimedia server 2 also answers to the message 6 by sending an acknowledgement message 7. Thus, the session between the remote device 1 and the multimedia server 2 is set, and the DISPLAY messages 4 sent by the multimedia server 2 to the remote device 1 will be created according to the display capabilities of said remote device.

According to another embodiment, when the session is initiated by the multimedia server 2, the remote device 1 can answer to the opening session message (not shown) sent by said multimedia server by sending an answer message 6 with a description of its display capabilities, the multimedia server 2 further answering to said message with an acknowledgement message 7.

During the session, the multimedia server 2 sends DISPLAY messages 4 to display functions 5 which are overlaid to the stream 3 displayed on the remote device 1. The functions 5 can also be temporary ones, as for example text-boxes displaying advertisements messages. In that case, the DISPLAY messages 4 can also be adapted for the removal of an overlaid function 5 displayed on the remote device.

The process can also comprise an analysis of the answer of the remote device 1, said analysis permitting to know the display capabilities of said remote device.

This analysis can for example take place after the reception by the multimedia server 2 of an opening session message 6 comprising a description of the display capabilities of the remote device 1, the multimedia server 2 sending an acknowledgement message 7 to said remote device at the end of said analysis.

In another embodiment, this analysis can also take place after the reception by the multimedia server 2 of the answer message 6 of the remote device 1 to the opening session message (not shown) previously sent by said multimedia server. At the end of the analysis, the multimedia server 2 also sends an acknowledgement message 7 to the remote device 1.

In another embodiment not shown, the process can comprise an analysis of the answer of the remote device 1 which takes place after the sending of a DISPLAY message 4 by the multimedia server 2 to said remote device, said analysis also permitting to know the display capabilities of said remote device.

In this embodiment, the multimedia server 2 sends a DISPLAY message 4 adapted for the display of an overlaid function 5 on a remote device 1 even if said remote device has not sent any description of its display capabilities to said multimedia server before.

After the reception of the DISPLAY message 4, the remote device 1 sends an answer message (not shown) to the multimedia server 2, said answer message being analysed in order to know the display capabilities of said remote device, a next DISPLAY message 4 could then be also created according to said capabilities.

If the remote device 1 embeds media player software which comprises means adapted to display the overlaid function 5 according to the DISPLAY message 4, said function is displayed on said remote device.

In particular, if the remote device 1 comprises the above described application, dedicated means of said application call the dedicated API after the reception of the DISPLAY message 4, said API also controlling the display of the overlaid function 5 according to said message.

Thus, in both of the above mentioned cases, the remote device 1 can send an acknowledgement message (not shown) to the multimedia server 2, a next DISPLAY message 4 being created according to said acknowledgement message, for instance to remove the overlaid function 5 whose display has been triggered by a former DISPLAY message 4.

On the contrary, if the remote device 1 has no means adapted to display an overlaid function 5, said remote device answers with an error message to the multimedia server 2, and said function is of course not displayed. Thus, the multimedia server 2 will no longer send any DISPLAY message 4 to the remote device 1.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for controlling the display functions of a remote device (1) during a video call session between said remote device and a multimedia server (2), wherein an audio and video stream (3) is sent to the remote device (1) by the multimedia server (2) within said session managed by a communication protocol, the process being **characterized in that** an add-on is created to the communication protocol in order to allow the multimedia server (2) to send a DISPLAY message (4) to the remote device (1), said message being adapted for the display of at least one function (5) which is overlaid to the stream (3) displayed on the remote device (1).

2. Process according to claim 1, **characterized in that** the function (5) is an interactive text box or an interactive button which is overlaid to the stream (3) displayed on the remote device (1).

3. Process according to claim 1 or 2, **characterized in that** it further comprises, during the opening session negotiation between the multimedia server (2) and the remote device (1), a declaration of the display capabilities of said remote device, the DISPLAY message (4) being created according to said capabilities.

4. Process according to claim 3, **characterized in that** during the declaration, the remote device (1) sends a message (6) with a description of its display capabilities.

5. Process according to any of claims 1 to 4, **characterized in that** a DISPLAY message (4) is also adapted for the removal of an overlaid function (5) displayed on the remote device (1).

6. Process according to any of claims 1 to 5, **characterized in that**, after the sending of a DISPLAY message (4), the process comprises an analysis of the answer of the remote device (1), said analysis permitting to know the display capabilities of said remote device, a next DISPLAY message (4) being created according to said capabilities.

7. Process according to any of claims 1 to 6, **characterized in that** the video call session is managed by using the SIP (Session Initiation Protocol) protocol.

8. Process according to any of claims 1 to 7, **characterized in that** it provides a dedicated API (Application Programming Interface), said API being called by the remote device (1) after the reception of a DISPLAY message (4) to control the display of the at least one function (5).

9. Multimedia server (2) comprising an application adapted to control the display functions of a remote device (1) during a video call session between said multimedia server and said remote device, said application comprising means adapted to create an add-on to the communication protocol managing said session in order to allow said multimedia server to send a DISPLAY message (4) to the remote device (1), said message being adapted for the display of at least one function (5) which is overlaid to the stream (3) displayed on the remote device (1).

10. Remote device (1) comprising an application adapted to control its display functions during a video call session between said remote device and a multimedia server (2) according to claim 9, said application comprising means adapted to call a dedicated API after the reception of a DISPLAY message (4) to control the display of the at least one function (5).
